# EUROPEAN PATENT APPLICATION

(11) **EP 4 810 839 A1**
(43) Date of publication of application: **23.09.2026**
(21) Application number: 25171525.6
(22) Date of filing: 21.04.2025
(51) Int. Cl.: F16K 15/14, F16K 15/20

(54) **AIR VALVE AND FILLED PRODUCT CONTAINING THE SAME**

(30) Priority: 20.03.2025 TW 114202759 U
(71) Applicant: Broad Design Co., Ltd., 23741 New Taipei City (TW)
(72) Inventor: HUANG, BO-XUAN, 23741 New Taipei City (TW)
(74) Representative: Cabinet Chaillot

(57) **Abstract**

The present invention introduces an air valve comprising a hollow annular base mount (10), which is combined with a flexible enclosure (51), and a detachable valve core (20) that is coupled with the base mount (10). The valve core (20) is designed in a recess-like configuration, defining an internal air chamber (211). An air passage (22) extends through the valve core (20), within which a valve plug (30) is positioned to seal the air passage (22). The valve plug (30) includes a flap valve (31) that lifts toward the air chamber (211) when suction is applied, thereby establishing communication between the air passage (22) and the air chamber (211). The valve core (20) of the air valve can be selectively detached to facilitate the inflation, deflation, filling, and firmness adjustment of a filled product (50), offering a versatile range of functionalities.

## Description

### Field of the Invention

The present invention relates to an air valve, in particular a detachable air valve, and to a filled product containing the same.

### Background of the Invention

Air valves are ubiquitous in everyday products such as rest mats, pillows, bean bags, swimming rings, and vacuum storage bags. These products rely on air valves to selectively inflate or deflate their internal air. Once the valve is closed, the product is ready for use, and when not in use, the internal air or contents can be expelled by opening the valve, allowing the product to be compacted for space efficiency.

However, conventional air valves are typically non-detachable from the product. Prolonged use often leads to internal component failure, resulting in air leakage and rendering the entire product unusable, which is wasteful. Additionally, in scenarios where contents need to be added or removed from the product, the product is often constrained by the valve structure, necessitating additional openings. This not only increases manufacturing complexity and cost but also introduces risks to airtightness. Consequently, there is a pressing need for improvements in the existing air valve structure.

### Summary of the Invention

To address the aforementioned issues of non-detachability and the inability to replace or repair components when the valve fails, the present invention introduces an air valve comprising a hollow annular base mount including a mounting flange radially extending from the outer wall of the base mount for combining with a flexible enclosure, and a detachable valve core that is axially inserted into the base mount and coupled with the base mount outside the flexible enclosure. The valve core is designed in a recess-like configuration, defining an internal air chamber. An air passage extends through a barrier wall of the valve core at a sealed end adjacent the base mount, within which a valve plug is positioned to seal the air passage. A passage ring surrounds the air passage and axially extends towards the air chamber. The valve plug includes a flap valve at one end to seal the air passage. The flap valve lifts toward the air chamber when suction or pushing force is applied, thereby establishing communication between the air passage and the air chamber. Additionally, an air valve cover is detachably coupled with the valve core and seals the air chamber. This air valve facilitates the inflation, deflation, filling, and firmness adjustment of a filled product, offering a versatile range of functionalities.

The present invention also introduces a filled product comprising a flexible enclosure with an opening at any location. The opening is provided with an air valve. The air valve comprises a hollow annular base mount, a valve core, a valve plug and an air valve cover. The hollow annular base mount includes a mounting flange radially extending from the outer wall of the base mount, the base mount passing through the opening, with one side of the mounting flange fixed to the flexible enclosure. The valve core is axially inserted into the base mount and is detachably combined with the base mount outside the flexible enclosure. The valve core is recess-like and defines an air chamber therein. The valve core includes a barrier wall at a sealed end adjacent the base mount and an air passage penetrating the barrier wall, with a passage ring surrounding the air passage and axially extending towards the air chamber. When the valve core is combined with the base mount, the air chamber faces outside the flexible enclosure. The valve plug is provided within the air passage, includes a flap valve at one end to seal the air passage, the flap valve responding to suction or pushing force by lifting to allow the air passage to communicate with the air chamber. The air valve cover is detachably coupled with the valve core outside the flexible enclosure and sealing the air chamber.

### Detailed Description of the Invention

The air valve further incorporates a restriction neck, which annularly protrudes within a passage ring, defining a diameter smaller than that of the air passage and/or the passage ring. The valve plug extends on both sides of the restriction neck, with one end featuring the flap valve and the other end featuring a sealing surface. The sealing surface presses against the restriction neck on the side opposite the air chamber, thereby sealing the restriction neck. Additionally, an airflow channel extends between the barrier wall and the passage ring, with two air inlet/outlets located at the passage ring and the barrier wall, respectively.

The air valve cover includes a cover ring that annularly protrudes from the inner side of the air valve cover. When the air valve cover is coupled with the valve core, the cover ring aligns axially with the passage ring, causing both sides of the flap valve to be pressed by the cover ring and the passage ring.

The barrier wall surface is recessed with a tool engagement slot, designed to engage with a tool head of a wrench.

The present invention also provides a filled product comprising a flexible enclosure with an opening at any location, where the opening is equipped with the aforementioned air valve.

The flexible enclosure contains a filler, the volume of which is smaller than the aperture of the base mount but larger than the aperture of the air inlet/outlet.

In operation, the air valve cover is removed to extract air from the filled product. When the air valve cover is removed, the sealing surface of the valve plug continues to press against the restriction neck, preventing the valve plug from moving or falling off the valve core. Simultaneously, the flap valve remains in place, sealing the air passage and preventing air from entering or exiting the filled product through the air passage.

A vacuum suction head is then connected to the valve core and covers the air chamber. When the vacuum suction head generates suction, the flap valve lifts due to the suction force, allowing airflow to enter the airflow channel through the air inlet/outlet in the barrier wall, pass through the air passage, and enter the air chamber through the gap between the flap valve and the passage ring. This process enables the vacuum suction head to extract air from the filled product, thereby reducing its volume.

The valve core can also be removed to inflate the filled product. The larger aperture of the base mount allows for rapid inflation, unlike conventional inflation devices with bidirectional air valves that restrict airflow and result in prolonged inflation times.

Furthermore, the filled product can be filled or replaced with the filler through the larger aperture of the base mount. This capability addresses a common issue with existing filled products, such as bean bag chairs, which are often discarded after long-term use due to deformation or loss of support of the filler (e.g., foam or foam beads), leading to resource waste.

The filled product can be adapted for multiple uses. For instance, it can function as a bean bag chair, allowing users to shape it according to sitting or lying preferences. When inflated, it serves as an air cushion, providing support. When filled with the filler and vacuumed, the filled product hardens and can be molded into any desired shape, with its firmness adjustable based on the degree of vacuum. This adaptability allows users to shape the product according to their body contours, enabling repeated reshaping and seamless transitions between firm and soft states.

### Brief Description of the Drawings

FIG. 1 is an exploded view of the first preferred embodiment of the present invention.
FIG. 2 is a cross-sectional view of the first preferred embodiment in the first state.
FIG. 3 is a cross-sectional view of the first preferred embodiment in the second state.
FIG. 4 is a cross-sectional view of the first preferred embodiment in the third state.
FIG. 5 is a cross-sectional view of the second preferred embodiment in the first state.
FIG. 6 is a cross-sectional view of the second preferred embodiment in the second state.
FIG. 7 is a cross-sectional view of the third preferred embodiment in the first state.
FIG. 8 is a cross-sectional view of the third preferred embodiment in the second state.

### Detailed Description of the Preferred Embodiments

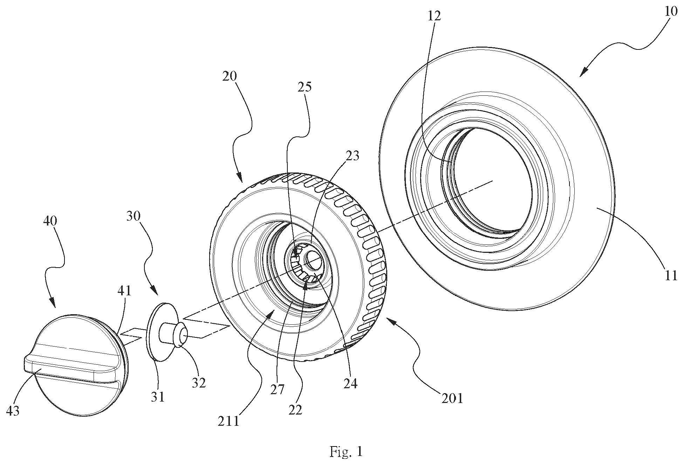

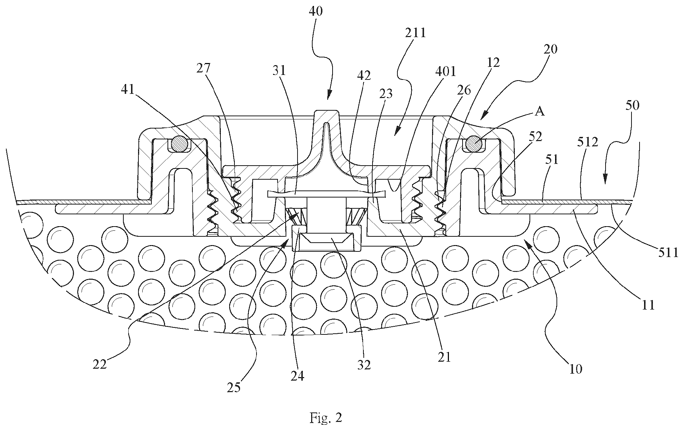

Referring to FIGS. 1 and 2, the first preferred embodiment of the air valve comprises a base mount (10), a valve core (20), a valve plug (30), and an air valve cover (40). The base mount (10) is hollow and annular, featuring a mounting flange (11) that radially extends from the outer wall of the base mount (10). This mounting flange (11) is designed to combine with a filled product (50).

The valve core (20) is axially inserted into the base mount (10) and detachably combined with it. The detachable connection can be achieved through various means, such as screw locking, pin insertion, or structural interlocking. In this embodiment, the inner wall of the base mount (10) is equipped with a mounting thread (12), while the outer wall of the valve core (20) is provided with an external thread (26). This configuration allows the valve core (20) to be screw-locked with the base mount (10) via the external thread (26) and the mounting thread (12).

To ensure airtightness, a sealing ring (A) (O-ring) can be installed between the valve core (20) and the base mount (10), effectively preventing air leakage.

The valve core (20) is recess-like in design and defines an air chamber (211), including a barrier wall (21), an air passage (22), a passage ring (23), a restriction neck (24), and an airflow channel (25).

The barrier wall (21) is formed at a sealed end (201) of the valve core (20), with the air passage (22) axially penetrating the barrier wall (21). Surrounding the air passage (22) is the passage ring (23), which axially extends toward the air chamber (211).

The restriction neck (24) annularly protrudes within the passage ring (23), defining a diameter smaller than that of the air passage (22) and/or the passage ring (23). The airflow channel (25) extends between the barrier wall (21) and the passage ring (23), with two air inlet/outlets (251) located at the passage ring (23) and the barrier wall (21), respectively.

The valve plug (30) is generally rod-shaped and is positioned within the air passage (22), protruding on both sides of the restriction neck (24). Specifically, at least a portion of the valve plug (30) has an outer diameter smaller than the diameter defined by the restriction neck (24). The valve plug (30) includes a flap valve (31) and a sealing surface (32). The flap valve (31) radially protrudes from one end of the valve plug (30), with a minimum diameter larger than that of the passage ring (23). The sealing portion (32) radially protrudes from the other end of the valve plug (30), with a minimum diameter larger than that of the restriction neck (24).

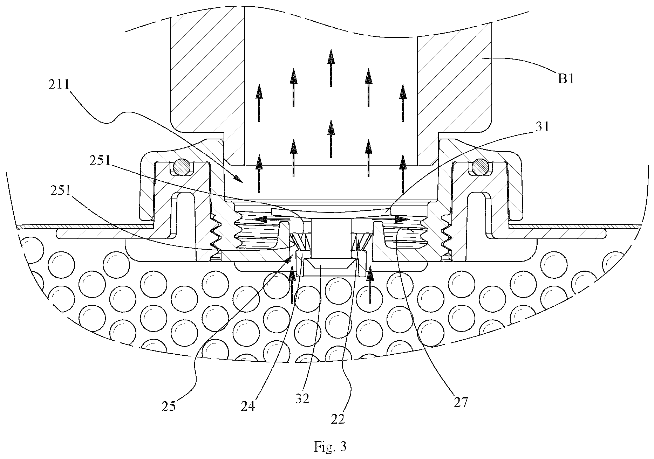

As shown in FIGS. 2 and 3, in the first embodiment, when the air valve is at rest, the valve plug (30) is positioned within the air passage (22), with the flap valve (31) located in the air chamber (211) and pressing against the end of the passage ring (23), thereby sealing the air passage (22). The sealing portion (32) presses against the restriction neck (24) on the side opposite the air chamber (211), effectively sealing the restriction neck (24). When suction is applied to the flap valve (31) toward the air chamber (211), airflow can enter the airflow channel (25) through an air inlet/outlet (251) in the barrier wall (21), pass through the air passage (22), and enter the air chamber (211) through the gap between the flap valve (31) and the passage ring (23).

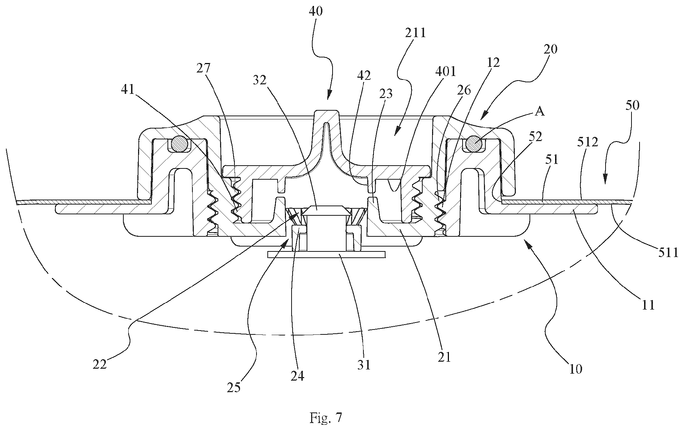

As shown in FIG. 7, in the second embodiment, when the air valve is at rest, the valve plug (30) is positioned within the air passage (22), with the flap valve (31) and the sealing surface (32) positioned oppositely. The sealing surface (32) is located in the air chamber (211) and presses against and seals the restriction neck (24). The flap valve (31) is located at the end of the restriction neck (24) opposite the air chamber (211), sealing the air passage (22) and the airflow channel (25). When a pushing force is applied to the flap valve (31) away from the air chamber (211), airflow can enter the air passage (22) and the airflow channel (25) from the air chamber (211).

These embodiments demonstrate that the air valve can be configured according to the direction of airflow by adjusting the position of the valve plug (30) within the air passage (22).

The flap valve (31) is made of a flexible elastic material, such as silicone or rubber, ensuring durability and responsiveness to changes in pressure.

Preferably, the valve plug (30) is integrally formed from the same elastic material.

The air valve cover (40) is disk-shaped and detachably coupled with the valve core (20), sealing the air chamber (211). The detachable connection can be achieved through screw locking, pin insertion, or structural interlocking. In this embodiment, the inner wall of the valve core (20) is provided with an internal thread (27), and the outer wall of the air valve cover (40) is equipped with a cover thread (41), allowing the air valve cover (40) to be screw-locked with the valve core (20) via the cover thread (41) and the internal thread (27).

To ensure airtightness, a sealing ring (A) (O-ring) can be installed between the air valve cover (40) and the valve core (20), effectively preventing air leakage.

The air valve cover (40) includes a cover ring (42) that annularly protrudes from an inner side (401) of the air valve cover (40). When the air valve cover (40) is coupled with the valve core (20), the cover ring (42) aligns axially with the passage ring (23). In the first embodiment, both sides of the flap valve (31) are pressed by the cover ring (42) and the passage ring (23), preventing air leakage through the air passage (22).

Preferably, the air valve cover (40) features a knob (43) on the side opposite the inner side (401), facilitating user assembly or disassembly of the air valve cover (40).

Referring to FIGS. 2 and 3, the present invention also provides a filled product (50) incorporating the aforementioned air valve. The filled product (50) comprises a flexible enclosure (51), which can be made from various materials, such as woven fabric or plastic film, forming a sealed bag structure. The flexible enclosure (51) features an opening (52) at any location, designed for the installation of the base mount (10) of the air valve. The base mount (10) passes through the opening (52), with one side of the mounting flange (11) fixed to the flexible enclosure (51) via adhesive bonding or heat welding. The mounting thread (12) of the base mount (10) protrudes outside the flexible enclosure (51) through the opening (52), enabling the valve core (20) to be combined with or detached from the base mount (10) outside the flexible enclosure (51). The air inlet/outlet (251) of the airflow channel (25) in the barrier wall (21) corresponds to the interior of the flexible enclosure (51).

The mounting flange (11) can be selectively attached to either an inner surface (511) or an outer surface (512) of the flexible enclosure (51). In this embodiment, the mounting flange (11) is positioned inside the flexible enclosure (51) and fixed to the inner surface (511), providing a secure and stable connection.

When the valve core (20) is combined with the base mount (10), the air chamber (211) faces outward, away from the flexible enclosure (51). This configuration allows the air valve cover (40) to be attached to or detached from the valve core (20) outside the flexible enclosure (51).

Referring to FIG. 3, in the first embodiment, the air valve cover (40) is removed to extract air from the filled product (50). When the air valve cover (40) is removed, the sealing surface (32) of the valve plug (30) still continues to press against the restriction neck (24), preventing the valve plug (30) from moving or falling off the valve core (20). Simultaneously, the flap valve (31) remains in place, sealing the air passage (22) and preventing air from entering or exiting the filled product (50) through the air passage (22).

A vacuum suction head (B1) is then connected to the valve core (20) and covers the air chamber (211). When the vacuum suction head (B1) generates suction, the flap valve (31) lifts in response, allowing airflow to enter the airflow channel (25) through the air inlet/outlet (251) in the barrier wall (21), pass through the air passage (22), and enter the air chamber (211) through the gap between the flap valve (31) and the passage ring (23). This process enables the vacuum suction head (B1) to extract air from the filled product (50), thereby reducing its volume and achieving a compacted state.

Referring to FIG. 7, in the second embodiment, the air valve cover (40) is removed to inflate the filled product (50). When the air valve cover (40) is removed, the sealing surface (32) of the valve plug (30) still continues to press against the restriction neck (24), preventing the valve plug (30) from moving or falling off the valve core (20). Simultaneously, the flap valve (31) remains in place, sealing the air passage (22) and preventing air from entering or exiting the filled product (50) through the air passage (22).

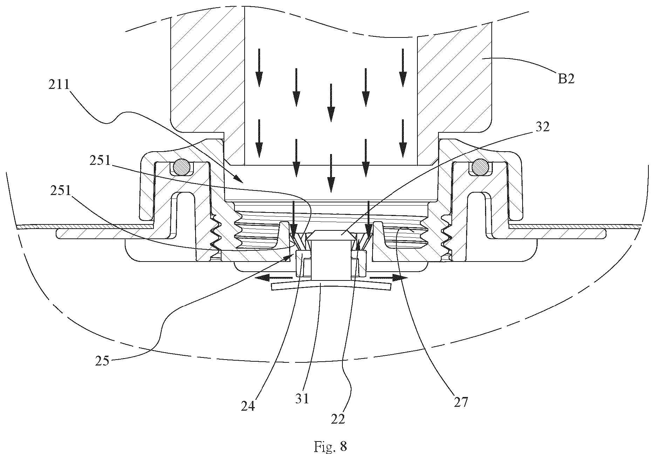

As shown in FIG. 8, an inflation head (B2) is connected to the valve core (20) and covers the air chamber (211). When the inflation head (B2) inflates toward the air chamber (211), the flap valve (31) lifts due to the airflow, moving away from the air chamber (211). The airflow then enters the air passage (22), the airflow channel (25), and the air inlet/outlets (251) from the air chamber (211), allowing the inflation head (B2) to inflate the filled product (50). In this embodiment, the valve plug (30) is positioned within the air passage (22) to achieve a bidirectional air valve effect, enabling controlled inflation or deflation of the filled product (50). This design prevents sudden expansion and potential rupture of the product during inflation.

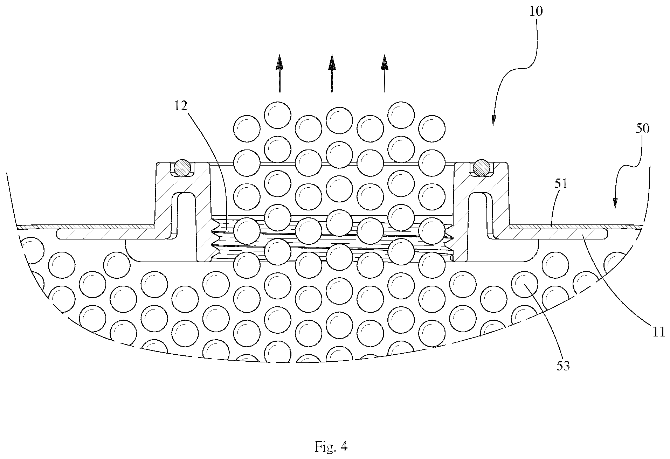

Referring to FIG. 4, the valve core (20) can be removed to inflate the filled product (50). The larger aperture of the base mount (10) allows for rapid inflation, unlike conventional inflation devices with bidirectional air valves that restrict airflow and result in prolonged inflation times. This feature is particularly advantageous for large-volume filled products (50) that require significant inflation.

The filled product (50) can also be filled or replaced with a filler (53) through the larger aperture of the base mount (10). Through the larger aperture of the base mount (10), the filler (53) with a volume smaller than the aperture of the base mount (10) and larger than the aperture of the air inlet/outlet (251) can be filled or discharged into or out of the flexible enclosure (51) of the filled product (50). This capability addresses a common issue with existing filled products, such as bean bag chairs, which are often discarded after long-term use due to deformation or loss of support of the filler (53) (e.g., foam or foam beads), leading to resource waste.

Additionally, the filled product (50) can be adjusted for multiple uses. For example, it can function as a bean bag chair, allowing users to shape it according to sitting or lying preferences. When inflated, the filled product (50) serves as an air cushion, providing support. When filled with the filler (53) and vacuumed, the filled product (50) hardens and can be molded into any desired shape, with its firmness adjustable based on the degree of vacuum. This adaptability allows users to shape the product according to their body contours, enabling repeated reshaping and seamless transitions between firm and soft states.

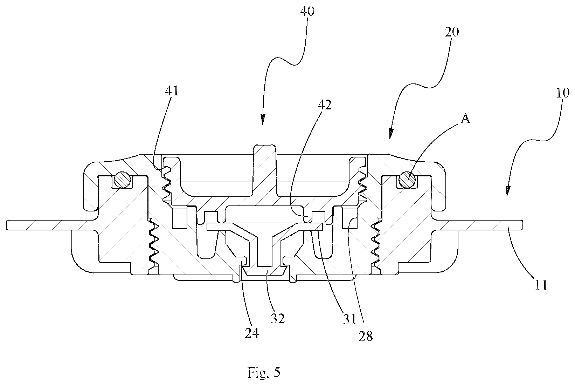

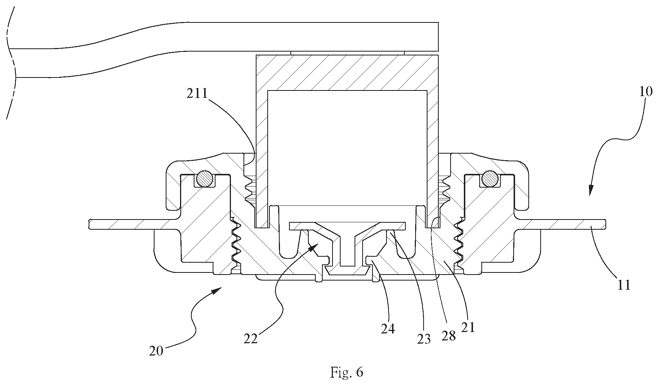

Referring to FIGS. 5 and 6, the second preferred embodiment of the air valve differs from the previous embodiment in that the surface of the barrier wall (21) in the valve core (20) is recessed with a tool engagement slot (28). This slot is designed to engage with a tool head (B) of a wrench (such as a polygonal or toothed socket for a handpiece), facilitating the user to remove the valve core (20) from the base mount (10).

### Reference Signs List

10: Base mount
11: Mounting flange
12: Mounting thread
20: Valve core
201: Sealed end
21: Barrier wall
211: Air chamber
22: Air passage
23: Passage ring
24: Restriction neck
25: Airflow channel
251: Air inlet/outlet
26: External thread
27: Internal thread
28: Tool engagement slot
30: Valve plug
31: Flap valve
32: Sealing portion
40: Air valve cover
401: Inner side
41: Cover thread
42: Cover ring
43: Knob
50: Filled product
51: Flexible enclosure
511: Inner surface
512: Outer surface
52: Opening
53: Filler
A: Sealing ring (O-ring)
B: Tool head
B1: Vacuum suction head
B2: Inflation head

## Claims

1. An air valve for combining with a flexible enclosure (51), comprising:
a hollow annular base mount (10) including a mounting flange (11) radially extending from the outer wall of the base mount (10) for combining with the flexible enclosure (51);
a valve core (20) axially inserted into the base mount (10) and detachably combined with the base mount (10) outside the flexible enclosure (51), the valve core (20) being recess-like and defining an air chamber (211) therein, the valve core (20) including a barrier wall (21) at a sealed end (201) adjacent the base mount (10) and an air passage (22) penetrating the barrier wall (21), with a passage ring (23) surrounding the air passage (22) and axially extending towards the air chamber (211);
a valve plug (30) provided within the air passage (22), including a flap valve (31) at one end to seal the air passage (22), the flap valve (31) responding to suction or pushing force by lifting to allow the air passage (22) to communicate with the air chamber (211); and
an air valve cover (40) detachably coupled with the valve core (20) and sealing the air chamber (211).

2. The air valve of claim 1, further comprising:
a restriction neck (24) annularly protruding within the passage ring (23), defining a diameter smaller than that of the air passage (22) and/or the passage ring (23);
the valve plug (30) protruding on both sides of the restriction neck (24), with one end including the flap valve (31) and the other end including a sealing surface (32), wherein:
the flap valve (31) is located in the air chamber (211), pressing against the end of the passage ring (23);
the sealing surface (32) presses against the restriction neck (24) on the side opposite the air chamber (211), sealing the restriction neck (24); and
an airflow channel (25) extending between the barrier wall (21) and the passage ring (23), with two air inlet/outlets (251) located at the passage ring (23) and the barrier wall (21), respectively.

3. The air valve of claim 1, further comprising:
a restriction neck (24) annularly protruding within the passage ring (23), defining a diameter smaller than that of the air passage (22) and/or the passage ring (23);
the valve plug (30) protruding on both sides of the restriction neck (24), with one end including the flap valve (31) and the other end including a sealing surface (32); and
an airflow channel (25) extending between the barrier wall (21) and the passage ring (23), with two air inlet/outlets (251) located at the passage ring (23) and the barrier wall (21), respectively, wherein:
the sealing surface (32) is located in the air chamber (211), pressing against and sealing the restriction neck (24); and
the flap valve (31) is located at the end of the restriction neck (24) opposite the air chamber (211), sealing the air passage (22) and the airflow channel (25).

4. The air valve of claim 2, wherein the air valve cover (40) includes a cover ring (42) annularly protruding from an inner side (401) of the air valve cover (40), and when the air valve cover (40) is coupled with the valve core (20), the cover ring (42) aligns axially with the passage ring (23), causing both sides of the flap valve (31) to be pressed by the cover ring (42) and the passage ring (23).

5. The air valve of claim 4, wherein the inner wall of the base mount (10) is provided with a mounting thread (12), and the outer wall of the valve core (20) is provided with an external thread (26) for screw-locking with the mounting thread (12).

6. The air valve of claim 4, wherein the inner wall of the valve core (20) is provided with an internal thread (27), and the outer wall of the air valve cover (40) is provided with a cover thread (41) for screw-locking with the internal thread (27).

7. The air valve of claim 4, wherein the air valve cover (40) has a knob (43) on the side opposite the cover ring (42).

8. The air valve of claim 4, wherein the barrier wall (21) surface is recessed with a tool engagement slot (28) for engaging with a tool head (B) of a wrench.

9. A filled product comprising a flexible enclosure (51) with an opening (52) at any location, the opening (52) provided with an air valve, the air valve comprising:
a hollow annular base mount (10) including a mounting flange (11) radially extending from the outer wall of the base mount (10), the base mount (10) passing through the opening (52), with one side of the mounting flange (11) fixed to the flexible enclosure (51);
a valve core (20) axially inserted into the base mount (10) and detachably combined with the base mount (10) outside the flexible enclosure (51), the valve core (20) being recess-like and defining an air chamber (211) therein, the valve core (20) including a barrier wall (21) at a sealed end (201) adjacent the base mount (10) and an air passage (22) penetrating the barrier wall (21), with a passage ring (23) surrounding the air passage (22) and axially extending towards the air chamber (211), wherein when the valve core (20) is combined with the base mount (10), the air chamber (211) faces outside the flexible enclosure (51);
a valve plug (30) provided within the air passage (22), including a flap valve (31) at one end to seal the air passage (22), the flap valve (31) responding to suction or pushing force by lifting to allow the air passage (22) to communicate with the air chamber (211); and
an air valve cover (40) detachably coupled with the valve core (20) outside the flexible enclosure (51) and sealing the air chamber (211).

10. The filled product of claim 9, wherein the air valve further comprises:
a restriction neck (24) annularly protruding within the passage ring (23), defining a diameter smaller than that of the air passage (22) and/or the passage ring (23);
the valve plug (30) protruding on both sides of the restriction neck (24), with one end including the flap valve (31) and the other end including a sealing surface (32); and
an airflow channel (25) extending between the barrier wall (21) and the passage ring (23), with two air inlet/outlets (251) located at the passage ring (23) and the barrier wall (21), respectively, and the air inlet/outlet (251) in the barrier wall (21) corresponding to the inside of the flexible enclosure (51), wherein:
the flap valve (31) is located in the air chamber (211), pressing against the end of the passage ring (23); or
the flap valve (31) is located at the end of the restriction neck (24) opposite the air chamber (211), sealing the air passage (22) and the airflow channel (25).

11. The filled product of claim 10, wherein the air valve cover (40) includes a cover ring (42) annularly protruding from the inner side (401) of the air valve cover (40), and when the air valve cover (40) is coupled with the valve core (20), the cover ring (42) aligns axially with the passage ring (23), causing both sides of the flap valve (31) to be pressed by the cover ring (42) and the passage ring (23).

12. The filled product of claim 11, wherein the flexible enclosure (51) contains a filler (53), the volume of which is smaller than the aperture of the base mount (10) but larger than the aperture of the air inlet/outlet (251).

13. The filled product of claim 11, wherein the inner wall of the base mount (10) is provided with a mounting thread (12), the mounting thread (12) protrudes outside the flexible enclosure (51) through the opening (52), and the outer wall of the valve core (20) is provided with an external thread (26) for screw-locking with the mounting thread (12).

14. The filled product of claim 11, wherein the inner wall of the valve core (20) is provided with an internal thread (27), and the outer wall of the air valve cover (40) is provided with a cover thread (41) for screw-locking with the internal thread (27).

## Amended claims

### Amended claims in accordance with Rule 137(2) EPC.

1. A filled product comprising a flexible enclosure (51) with an opening (52) at any location, the opening (52) provided with an air valve, **characterized in that** the air valve comprises:
a hollow annular base mount (10) including a mounting flange (11) radially extending from the outer wall of the base mount (10), the base mount (10) passing through the opening (52), with one side of the mounting flange (11) fixed to the flexible enclosure (51);
a valve core (20) axially inserted into the base mount (10) and detachably combined with the base mount (10) outside the flexible enclosure (51), the valve core (20) being recess-like and defining an air chamber (211) therein, the valve core (20) including a barrier wall (21) at a sealed end (201) adjacent the base mount (10) and an air passage (22) penetrating the barrier wall (21), with a passage ring (23) surrounding the air passage (22) and axially extending towards the air chamber (211), wherein when the valve core (20) is combined with the base mount (10), the air chamber (211) faces outside the flexible enclosure (51);
a valve plug (30) provided within the air passage (22), including a flap valve (31) at one end to seal the air passage (22), the flap valve (31) responding to suction or pushing force by lifting to allow the air passage (22) to communicate with the air chamber (211); and
an air valve cover (40) outside the flexible enclosure (51) and sealing the air chamber (211), the air valve cover (40) includes a cover ring (42) annularly protruding from the inner side (401) of the air valve cover (40), and when the air valve cover (40) is coupled with the valve core (20), the cover ring (42) aligns axially with the passage ring (23), and opposite sides of the flap valve (31) are respectively pressed by the cover ring (42) and the passage ring (23)..

2. The filled product of claim 1, wherein the air valve further comprises:
a restriction neck (24) annularly protruding within the passage ring (23), defining a diameter smaller than that of the air passage (22) and/or the passage ring (23);
the valve plug (30) protruding on both sides of the restriction neck (24), with one end including the flap valve (31) and the other end including a sealing surface (32), wherein:
the flap valve (31) is located in the air chamber (211), pressing against the end of the passage ring (23);
the sealing surface (32) presses against the restriction neck (24) on the side opposite the air chamber (211), sealing the restriction neck (24); and
an airflow channel (25) extending between the barrier wall (21) and the passage ring (23), with two air inlet/outlets (251) located at the passage ring (23) and the barrier wall (21), respectively, and the air inlet/outlet (251) in the barrier wall (21) corresponding to the inside of the flexible enclosure (51).

3. The filled product of claim 1, wherein the air valve further comprises:
a restriction neck (24) annularly protruding within the passage ring (23), defining a diameter smaller than that of the air passage (22) and/or the passage ring (23);
the valve plug (30) protruding on both sides of the restriction neck (24), with one end including the flap valve (31) and the other end including a sealing surface (32); and
an airflow channel (25) extending between the barrier wall (21) and the passage ring (23), with two air inlet/outlets (251) located at the passage ring (23) and the barrier wall (21), respectively, and the air inlet/outlet (251) in the barrier wall (21) corresponding to the inside of the flexible enclosure (51), wherein:
the sealing surface (32) is located in the air chamber (211), pressing against and sealing the restriction neck (24); and
the flap valve (31) is located at the end of the restriction neck (24) opposite the air chamber (211), sealing the air passage (22) and the airflow channel (25).

4. The air valve of claim 2, wherein the inner wall of the base mount (10) is provided with a mounting thread (12), the mounting thread (12) protrudes outside the flexible enclosure (51) through the opening (52), and the outer wall of the valve core (20) is provided with an external thread (26) for screw-locking with the mounting thread (12).

5. The air valve of claim 1, wherein the inner wall of the valve core (20) is provided with an internal thread (27), and the outer wall of the air valve cover (40) is provided with a cover thread (41) for screw-locking with the internal thread (27).

6. The air valve of claim 1, wherein the air valve cover (40) has a knob (43) on the side opposite the cover ring (42).

7. The air valve of claim 1, wherein the barrier wall (21) surface is recessed with a tool engagement slot (28) for engaging with a tool head (B) of a wrench.
